# EUROPEAN PATENT APPLICATION

(11) **EP 4 364 561 A1**
(43) Date of publication of application: **08.05.2024**
(21) Application number: 23207798.2
(22) Date of filing: 03.11.2023
(51) Int. Cl.: A01K 85/16, A01K 85/00

(54) **MAGNETIC WEIGHT DISTRIBUTION MECHANISM IN A FISHING LURE**

(30) Priority: 04.11.2022 US 202263382431 P
(71) Applicant: Pure Fishing, Inc., Spirit Lake, IA 51360 (US)
(72) Inventor: VIDALIS, Markos, Kallithea (GR)
(74) Representative: Cabinet Beau de Loménie

(57) **Abstract**

A weight distribution system (30) for a fishing lure (10) with front and rear ends includes a cavity (22) within the fishing lure having a long axis parallel to a long axis of the fishing lure; a movable weight (34) freely movable within and along the long axis of the cavity; a weight magnet (36) associated with the movable weight and having a positive pole and a negative pole; a rear magnet (38) mounted adjacent to a rear end of the cavity and having a positive pole and a negative pole; and wherein the rear magnet (38) and the weight magnet (36) are arranged such that their respective like poles face one another to exert a repulsive force biasing the movable weight away from the rear magnet and the rear end of the fishing lure. A fishing lure including the weight distribution system is also disclosed.

## Description

### CROSS REFERENCE

This application claims priority to U.S. Provisional Application No. 63/382,431 filed November 4, 2022, the disclosure of which is hereby incorporated by reference herein in its entirety and to which the person of the art can refer to when considering the present disclosure.

### TECHNICAL FIELD

The present disclosure is directed to fishing lures and, more particularly, to an improved magnetic weight distribution system for fishing lures.

### BACKGROUND

Movable weight systems are used in lures in an effort to provide for both better casting and water movement. Weight transfer provides improved performance of the lure during casting and during retrieval. During casting, having the weight, and as a result the center of gravity, biased toward the rear of the lure helps minimize tumbling of the lure, which allows for longer and more accurate casting. During retrieval, having the weight biased toward the middle or front of the lure produces a more desirable movement pattern for the lure while in water. Examples of systems used to produce weight movement include springs and single magnet systems. Known single magnet systems use only a front magnet configured to exert an attraction force on the weight(s) within the lure.

Each of these systems suffers from inherent weaknesses. Spring based systems are limited by the inevitable wear that occurs with a mechanical system. The spring force in the system can change over time as the spring wears, which may alter the weight movement in an undesirable manner. Further, spring systems are more susceptible to breakage. Current magnetic systems are inconsistent due to the limited forces that can be applied to the movable weight, and they tend to underperform in strong weather conditions or with lures or fishing conditions that require aggressive movement of the lure.

Therefore, it would be desirable to provide a weight distribution system that is more robust and provides for more consistent and accurate weight movement in a variety of conditions and fishing techniques.

### SUMMARY

According to an aspect of the present disclosure, there is provided a weight distribution system for a fishing lure having a front end and a rear end and a lure long axis between the front end and the rear end that includes a cavity defined within the fishing lure and having a cavity long axis oriented parallel to the lure long axis; a movable weight freely movable within the cavity and along the cavity long axis; a weight magnet associated with the movable weight and having a positive pole and a negative pole; a rear magnet fixedly mounted at a rear end of the cavity and having a positive pole and a negative pole; and wherein the rear magnet and the weight magnet are arranged such that their respective like poles face one another to exert a repulsive force biasing the movable weight away from the rear magnet and the rear end of the cavity.

According to another aspect of the present disclosure, the weight distribution system includes a front magnet fixedly mounted at a front end of the cavity and having a positive pole and a negative pole and wherein the front magnet and the weight magnet are arranged such that their respective unlike poles face one another to exert an attraction force biasing the movable weight toward the front magnet and the front end of the cavity.

According to another aspect of the present disclosure, the weight magnet and movable weight are distinct pieces and the weight magnet is secured at a rear end of the movable weight facing the rear magnet.

According to another aspect of the present disclosure, the movable weight is composed of a ferromagnetic material and is magnetized by the weight magnet with a polarity orientation identical to a polarity orientation of the weight magnet.

According to another aspect of the present disclosure, the weight distribution system includes a front magnet fixedly mounted at a front end of the cavity and having a positive pole and a negative pole, wherein the front magnet and the weight magnet are configured with their respective unlike poles facing one another; wherein the movable weight is composed of a non-ferromagnetic material; a piece of ferromagnetic material secured to a front end of the movable weight facing the front magnet; and wherein the piece of ferromagnetic material is magnetized by the weight magnet with the same polarity orientation as the weight magnet.

According to another aspect of the present disclosure, the movable weight is composed of a ferromagnetic material and the weight magnet is integral with the movable weight.

According to another aspect of the present disclosure, the weight distribution system includes a shaft mounted within the cavity and oriented parallel to the cavity long axis and wherein the movable weight is slidably mounted on the shaft and configured to slide along the shaft.

According to another aspect of the present disclosure, the movable weight has an axial channel and a shaft passes through the axial channel.

According to another aspect of the present disclosure, the movable weight has a first cross-sectional shape and the cavity has a second cross-sectional shape and the first cross-sectional shape and the second cross-sectional shape are the same. The first cross-sectional shape and the second cross-sectional shape may be ellipses.

According to another aspect of the present disclosure, the movable weight is a cylinder.

According to another aspect of the present disclosure, the weight distribution system includes a front magnet fixedly mounted at a front end of the cavity and having a positive pole and a negative pole; wherein the front magnet and the weight magnet are configured with their respective unlike poles facing one another; wherein the movable weight is composed of a non-ferromagnetic material; a piece of ferromagnetic material secured to a front end of the movable weight facing the front magnet; and wherein the piece of ferromagnetic material is magnetized by the weight magnet with the same polarity orientation as the weight magnet.

According to another aspect of the present disclosure, a fishing lure includes a weight distribution system including a cavity defined within the fishing lure and having a cavity long axis oriented parallel to the lure long axis; a movable weight freely movable within the cavity and along the cavity long axis; a weight magnet associated with the weight and having a positive pole and a negative pole; a rear magnet fixedly mounted at a rear end of the cavity and having a positive pole and a negative pole; and wherein the rear magnet and the weight magnet are arranged such that their respective like poles face one another to exert a repulsive force biasing the movable weight away from the rear magnet and the rear end of the cavity.

According to another aspect of the present disclosure, the fishing lure includes a front magnet fixedly mounted adjacent to a front end of the cavity and having a positive pole and a negative pole and wherein the front magnet and the weight magnet are arranged such that their respective unlike poles face one another to exert an attraction force biasing the movable weight toward the front magnet and the front end of the cavity.

These aspects are merely illustrative of the innumerable aspects associated with the present disclosure and should not be deemed as limiting in any manner. These and other aspects, features and advantages of the present disclosure will become apparent from the following detailed description when taken in conjunction with the referenced drawings.

### BRIEF DESCRIPTION OF DRAWINGS

Reference is now made more particularly to the drawing, which illustrates the best presently known mode of carrying out the disclosure and wherein similar reference characters indicate the same parts throughout all views.
Fig. 1 is a cutaway side view of a fishing lure containing a magnetic weight distribution system according to an embodiment of the present disclosure.
Fig. 2 is a cutaway side view of a fishing lure containing a magnetic weight distribution system according to another embodiment of the present disclosure.
Fig. 3 is a schematic view of a magnetic weight distribution system according to another embodiment of the present disclosure.

### DETAILED DESCRIPTION

The following description of technology is merely exemplary in nature of the subject matter, manufacture and use of one or more inventions, and is not intended to limit the scope, application, or uses of any specific invention claimed in this application or in such other applications as may be filed claiming priority to this application, or patents issuing therefrom. The following definitions and non-limiting guidelines must be considered in reviewing the description of the technology set forth herein.

The headings and sub-headings used herein are intended only for general organization of topics within the present disclosure and are not intended to limit the disclosure of the technology or any aspect thereof. In particular, subject matter disclosed in the "Background" may include novel technology and may not constitute a recitation of prior art. Subject matter disclosed in the "Summary" is not an exhaustive or complete disclosure of the entire scope of the technology or any embodiments thereof. Classification or discussion of a material within a section of this specification as having a particular utility is made for convenience, and no inference should be drawn that the material must necessarily or solely function in accordance with its classification herein when it is used in any given composition.

The citation of references herein does not constitute an admission that those references are prior art or have any relevance to the patentability of the technology disclosed herein. All references cited in the "Detailed Description" section of this specification are hereby incorporated by reference in their entirety.

The description and specific examples, while indicating embodiments of the technology, are intended for purposes of illustration only and are not intended to limit the scope of the technology. Moreover, recitation of multiple embodiments having stated features is not intended to exclude other embodiments having additional features, or other embodiments incorporating different combinations of the stated features. Specific examples are provided for illustrative purposes of how to make and use the apparatus and systems of this technology and, unless explicitly stated otherwise, are not intended to be a representation that given embodiments of this technology have, or have not, been made or tested.

As used herein, the word "include," and its variants, is intended to be non-limiting, such that recitation of items in a list is not to the exclusion of other like items that may also be useful in the materials, compositions, devices, and methods of this technology. Similarly, the terms "can" and "may" and their variants are intended to be non-limiting, such that recitation that an embodiment can or may comprise certain elements or features does not exclude other embodiments of the present technology that do not contain those elements or features.

"A" and "an" as used herein indicate "at least one" of the item is present; a plurality of such items may be present, when possible. "About" when applied to values indicates that the calculation or the measurement allows some slight imprecision in the value (with some approach to exactness in the value; approximately or reasonably close to the value; nearly). If, for some reason, the imprecision provided by "about" is not otherwise understood in the art with this ordinary meaning, then "about" as used herein indicates at least variations that may arise from ordinary methods of measuring or using such parameters. In addition, disclosure of ranges includes disclosure of all distinct values and further divided ranges within the entire range.

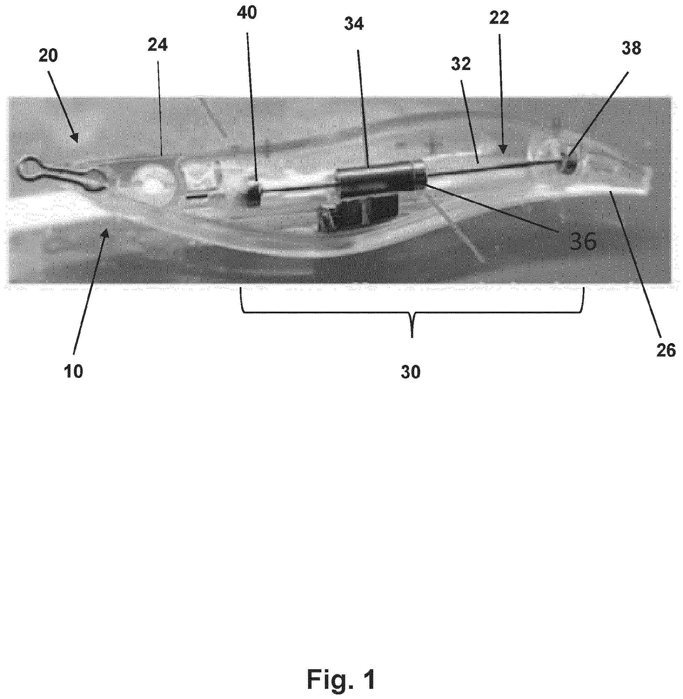

Figs. 1 - 3 illustrate embodiments of a magnetic weight distribution system 30 for a lure 10 according to the present disclosure. The lure 10 includes a body 20 having a cavity 22 therein. The cavity 22 contains the magnetic weight distribution system 30 that includes a movable weight 34 configured to slide relatively freely within the cavity 22 between the front and rear of the cavity 22. The movable weight 34 may be steel, tungsten, brass, or any other suitable material. In some embodiments, the movable weight 34 may comprise a cylinder shaped piece having a cross-sectional shape of an ellipses, for example, an oval or circular cross-sectional shape. However, the movable weight 34 may be provided in any cross-sectional shape that allows for free movement along the length of the cavity 22, but preferably, although not exclusively, having a cross-sectional shape of the cavity 22 to minimize movement of the movable weight 34 in a direction other than along or parallel to the axis of the cavity 22.

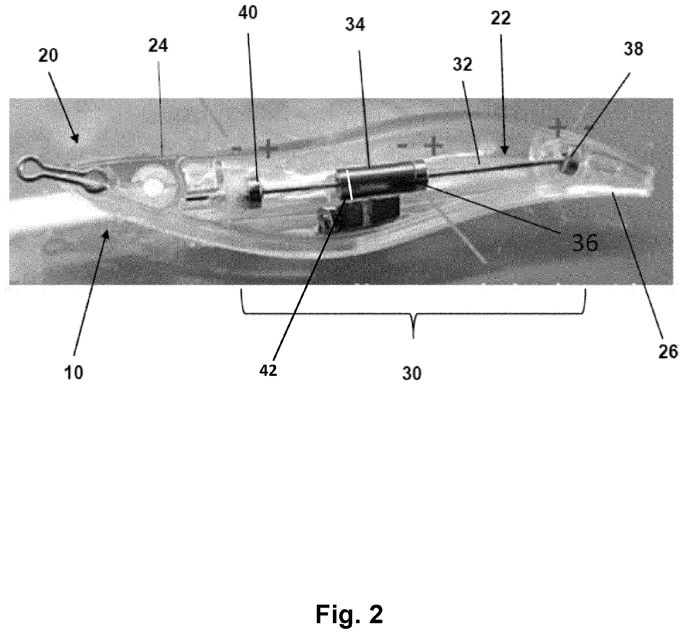

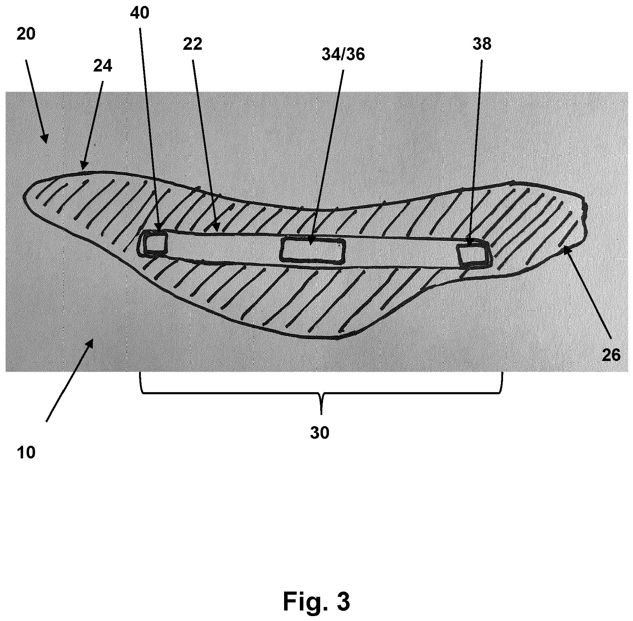

In some embodiments, the movable weight 34 may be constrained or directed in its movement solely by the wall(s) of the cavity 22 as shown in Fig. 3. In other embodiments, such as the embodiments illustrated in Figs. 1 and 2, a shaft 32 extends within the cavity 22 parallel with the axis of the body 20 between its front end 24 and rear end 26 and fixed in place at each end. The movable weight 34 may be connected with the shaft 32, for example, by providing the movable weight 34 with an axial channel through which the shaft 32 passes during assembly of the magnetic weight distribution system 30 such that the movable weight 34 is able to freely move along at least a portion of the length of the shaft 32 between the front end 24 and the rear end 26 of the body 20 within the cavity 22.

Movement of the weight 34 between the front end 24 and the rear end 26 of the body 20 provides for a transfer of weight resulting in improved performance of the lure 10 during casting and during retrieval. During casting, having the movable weight 34, and as a result the center of gravity, biased toward the rear of the lure 10 helps minimize tumbling of the lure 10, which allows for longer and more accurate casting. During retrieval, having the movable weight 34 biased toward the middle to front of the lure 10 produces a more desirable movement pattern for the lure 10 while it is in the water.

The magnetic weight distribution system 30 within the cavity 22 provides improved control of this weight transfer. A weight magnet 36 is associated with the movable weight 34. The weight magnet 36 may be a part distinct from and connected to the movable weight 34 or integrated with the movable weight 34 as a single piece. If the weight magnet 36 is distinct from and connected to the movable weight 34, it may be positioned at an end of the movable weight 34 facing the rear end 26 of the body 20 and cavity 22. The weight magnet 36 may be secured to the movable weight 34 by magnetic force in embodiments using a movable weight 34 made of steel or another ferromagnetic material. In embodiments using movable weights 34 of other, non-ferromagnetic materials, the weight magnet 36 may be attached with an adhesive or other suitable means. In other embodiments, the movable weight 34 and the weight magnet 36 may be integral with one another; for example, the weight magnet 36 itself may be sufficient to serve as the movable weight 34 as well.

A rear magnet 38 is secured at the rear end 26 of the cavity 22. The rear magnet 38 may be, but is not required to be, secured on the shaft 32 in those embodiments having a shaft 32. The rear magnet 38 may alternatively be secured at the rear end of the cavity 22. The orientation of the polarities of the weight magnet 36 and rear magnet 38 relative to one another provide for controlled movement of the movable weight 34 within the cavity 22. The weight magnet 36 and rear magnet 38 are configured such that like polarities of the weight magnet 36 and the rear magnet 38 face one another, *i.e.,* the positive pole of the weight magnet 36 faces the positive pole of the rear magnet 38 or the negative pole of the weight magnet 36 faces the negative pole of the rear magnet 38, to create a repulsive force when the weight magnet 36 and the rear magnet 38 are in close proximity to one another. The repulsive force between the weight magnet 36 and the rear magnet 38 biases the movable weight 34 away from the rear magnet 38. In the illustrated embodiment, the weight magnet 36 is positioned with its positive polarity side facing toward the rear magnet 38 and the positive polarity side of the rear magnet 38 is accordingly positioned to face the weight magnet 36. Therefore, when the movable weight 34 slides toward the rear magnet 38, the rear magnet 38 and the weight magnet 36 act to repel one another. The polarities of the weight magnet 36 and the rear magnet 38 may be reversed so long as the like polarities of the weight magnet 36 and the rear magnet 38 face one another.

During casting, the momentum of the lure 10 will cause the movable weight 34 to slide on the shaft 32 toward the rear magnet 38. The casting momentum is sufficient to overcome the repulsive force created by the weight magnet 36 and rear magnet 38 relative to one another. This movement of the movable weight 34 moves the center of gravity of the lure 10 towards the rear end 26 of the lure 10. However, as the cast is completed and the forward momentum of the lure 10 reduces, the repulsive force generated by the proximity of the weight magnet 36 and rear magnet 38 again biases the movable weight 34 away from the rear magnet 38 and toward the front end of the cavity 22 and, as a result of that movement, adjusts the center of gravity of the lure 10 to the middle to front of the lure 10 where it remains while the lure 10 is in the water.

In some embodiments, such as shown in Fig. 1, the magnetic weight distribution system 30 may also include a front magnet 40 secured adjacent to the front end 24 of the cavity 22. The front magnet 40 may alternatively be secured to the shaft 32, adjacent to the front end of the shaft 32, if provided. The front magnet 40 may be, but is not required to be, mounted on the shaft 32.

In embodiments in which the movable weight 34 is made from a ferromagnetic material, for example, steel, the weight magnet 36, which is magnetically attached to the ferromagnetic movable weight 34, magnetizes the movable weight 34 with a polarity opposite to that of the front magnet 40. In embodiments in which the movable weight 34 is a non-ferromagnetic material, for example, brass, tungsten, or lead, a piece of ferromagnetic material 42, such as iron or steel, may be attached, for example, with an adhesive, to the front end of the movable weight 34 as shown in the embodiment of Fig. 2. Similarly to embodiments where the movable weight 34 itself is a ferromagnetic material, the front piece of ferromagnetic material is magnetized by the weight magnet 36.

The front magnet 40 is positioned such that the front magnet 40 and the weight magnet 36, magnetized movable weight 34, and/or the front piece of ferromagnetic material have their unlike polarity sides facing one another, *i.e.,* the positive pole of the front magnet 40 faces the negative pole of the weight magnet 36, magnetized movable weight 34, and/or the front piece of ferromagnetic material, or the negative pole of the front magnet 40 faces the positive pole of the weight magnet 36, magnetized movable weight 34, and/or the front piece of ferromagnetic material. This creates an attraction force between the weight magnet 36, magnetized movable weight 34, and/or the front piece of ferromagnetic material and the front magnet 40. This attraction force biases the movable weight 34 toward the front of the cavity 22 and assists in moving the movable weight 34 toward the front of the lure 10 as the momentum of a cast lessens. This attraction force holds the movable weight 34 at the front of the cavity 22, which is near the middle to front of the lure 10, to maintain a desired action balance while the lure 10 is in the water.

In lures having a smaller weight transfer distance, it may be beneficial to omit the front magnet 40. In such cases, the repulsive force between the weight magnet 36 and rear magnet 38 is sufficient to hold the movable weight 34 at the front end 24 of the cavity 22.

The magnetic weight distribution system of embodiments of the present disclosure is advantageous in a variety of lure types. For example, with lures having standard movable weights and that are typically used with strong jerks during retrieval, such as Egi lures, jerk baits, or top water lures, the forces exerted on the lure may force the movable weight toward the rear or tail of the lure, which can result in the lure dropped to the bottom of the body of water and becoming snagged. Embodiments of the present disclosure provide for more consistent weight transfer, which results in longer and more accurate casting with the weight in the rear position, and, with the weight in the middle to front position, reduced diving at water impact and better movement of the lure in water.

The preferred embodiments of the disclosure have been described above to explain the principles of the invention and its practical application to thereby enable others skilled in the art to utilize the invention. However, as various modifications could be made in the constructions and methods herein described and illustrated without departing from the scope of the invention, it is intended that all matter contained in the foregoing description or shown in the accompanying drawings, including all materials expressly incorporated by reference herein, shall be interpreted as illustrative rather than limiting. Thus, the breadth and scope of the present invention should not be limited by the above-described exemplary embodiment but should be defined only in accordance with the following claims appended hereto and their equivalents.

## Claims

1. A weight distribution system (30) for a fishing lure (10) having a front end and a rear end and a lure long axis between the front end and the rear end, comprising:
a cavity (22) defined within the fishing lure and having a cavity long axis oriented parallel to the lure long axis;
a movable weight (34) freely movable within the cavity and along the cavity long axis;
a weight magnet (36) associated with the movable weight and having a positive pole and a negative pole;
a rear magnet (38) fixedly mounted adjacent to a rear end of the cavity and having a positive pole and a negative pole; and
wherein the rear magnet (38) and the weight magnet (36) are arranged such that their respective like poles face one another to exert a repulsive force biasing the movable weight (34) away from the rear magnet and the rear end of the fishing lure.

2. The weight distribution system for a fishing lure as set forth in claim 1, further comprising a front magnet (40) fixedly mounted adjacent at a front end of the cavity (22) and having a positive pole and a negative pole and wherein the front magnet (40) and the weight magnet (36) are arranged such that their respective unlike poles face one another to exert an attraction force biasing the movable weight toward the front magnet and the front end of the fishing lure.

3. The weight distribution system for a fishing lure as set forth in claim 1 or 2, wherein the weight magnet (36) and movable weight (34) are distinct pieces and wherein the weight magnet is secured at a rear end of the movable weight facing the rear magnet.

4. The weight distribution system for a fishing lure as set forth in claim 3, wherein the movable weight (34) is composed of a ferromagnetic material and is magnetized by the weight magnet (36) with a polarity orientation identical to a polarity orientation of the weight magnet.

5. The weight distribution system for a fishing lure as set forth in claim 3 or 4, further comprising:
a front magnet (40) fixedly mounted adjacent at a front end of the cavity (22) and having a positive pole and a negative pole, wherein the front magnet and the weight magnet are configured with their respective unlike poles facing one another;
wherein the movable weight (34) is composed of a non-ferromagnetic material;
a piece of ferromagnetic material (42) secured to a front end of the movable weight facing the front magnet; and
wherein the piece of ferromagnetic material is magnetized by the weight magnet with the same polarity orientation as the weight magnet.

6. The weight distribution system for a fishing lure as set forth in any of claims 1 to 5, wherein the movable weight (34) is composed of a ferromagnetic material and wherein the weight magnet (36) is integral with the movable weight.

7. The weight distribution system for a fishing lure as set forth in any of claims 1 to 6, further comprising a shaft (32) mounted within the cavity (22) and oriented parallel to the cavity long axis and wherein the movable weight (34) is slidably mounted on the shaft and configured to slide along the shaft.

8. The weight distribution system for a fishing lure as set forth in claim 7, wherein the movable weight (34) has an axial channel and wherein the shaft (32) passes through the axial channel.

9. The weight distribution system for a fishing lure as set forth in any of claims 1 to 8, wherein the movable weight (34) comprises a first cross-sectional shape and the cavity (22) comprises a second cross-sectional shape and wherein the first cross-sectional shape and the second cross-sectional shape are the same.

10. The weight distribution system for a fishing lure as set forth in claim 9, wherein the first cross-sectional shape and the second cross-sectional shape comprise ellipses.

11. The weight distribution system for a fishing lure as set forth in any of claims 1 to 10, wherein the movable weight comprises a cylinder.

12. The weight distribution system for a fishing lure as set forth in any of claims 1, 3, and 7 to 11, further comprising:
a front magnet (40) fixedly mounted adjacent to a front end of the cavity (22) and having a positive pole and a negative pole, wherein the front magnet and the weight magnet (36) are configured with their respective unlike poles facing one another;
wherein the movable weight (34) is composed of a non-ferromagnetic material;
a piece of ferromagnetic material (42) secured to a front side of the movable weight facing the front magnet; and
wherein the piece of ferromagnetic material is magnetized by the weight magnet with the same polarity orientation as the weight magnet.

13. A fishing lure (10) having a front end and a rear end and a long axis between the front end and the rear end and a weight distribution system (30) according to any of claims 1 to 12.
